# EUROPÄISCHE PATENTSCHRIFT

(11) **EP 0 791 707 B1**
(45) Veröffentlichungstag und Bekanntmachung des Hinweises auf die Patenterteilung: **11.12.2002**
(21) Anmeldenummer: 97102381.7
(22) Anmeldetag: 14.02.1997
(51) Int. Cl.: E05B 65/12, E05B 53/00, B60R 25/02

(54) **Kraftfahrzeugschloss**
Lock for motor vehicle
Serrure pour véhicule automobile

(30) Priorität: 19.02.1996 DE 19606038
(43) Veröffentlichungstag der Anmeldung: 27.08.1997
(73) Patentinhaber: VALEO GmbH & Co Schliesssysteme KG, 42571 Heiligenhaus (DE)
(72) Erfinder: Strütt, Achim, 64560 Riedstadt (DE); Lieb, Kurt, 63500 Seligenstadt (DE); Kalesse, Michael, 40885 Ratingen (DE)
(74) Vertreter: Podszus, Burghart, Dipl.-Phys., Dipl.-Wirtsch.-Ing.

(56) Entgegenhaltungen:
- EP-A- 0 069 900
- EP-A- 0 315 174
- EP-A- 0 580 970
- US-A- 2 049 742
- US-A- 5 309 744

## Beschreibung

Die Erfindung betrifft ein Kraftfahrzeugschloß gemäß den Merkmalen des Oberbegriffs des Anspruchs 1.

Derartige Kraftfahrzeugschlösser werden vorwiegend als Lenkund/oder Zündschlösser bei Fahrzeugen mit Getriebeautomatik verwendet. Sie bestehen aus einem von einer ersten Stellung (Ausgangsstellung) in eine zweite Stellung (Betriebsstellung) drehbaren Schließzylinder, welcher mit einer Steuervorrichtung mechanisch gekoppelt ist. Die Steuervorrichtung ist ihrerseits z.B. über einen Bowdenzug mit einem verschiebbar angeordneten Sperrbolzen verbunden, der in der Ausgangsstellung den Wählhebel des Automatikgetriebes in der Parkstellung "P" (Sperrstellung) verriegelt.

Ein derartiges Kraftfahrzeugschloß ist aus den deutschen Patentschriften DE 39 39 748 C2 bekannt. Dabei besteht die mit dem Schließzylinder verbundene Steuervorrichtung im wesentlichen aus einer Nockenscheibe, die sich bei Drehung des Schließzylinders mitdreht und einen radial zur Längsachse des Schließzylinders angeordneten Stift betätigt. Dieser Stift verschwenkt einen Hebel, an dem das kraftfahrzeugseitige Ende des Bowdenzuges angeordnet ist.

Nachteilig ist bei dem bekannten Kraftfahrzeugschloß u.a., daß es, bezogen auf die Längsachse des Schließzylinders, einen relativ großen seitlichen Einbauraum erfordert. Gerade bei Kraftfahrzeugen ist ein derartiger Einbauraum häufig aber nicht vorhanden, wenn beispielsweise das Schloß als Zündschloß an der Lenkradsäule befestigt werden soll.

Aus der DE 41 20 382 A1 ist ein Kraftfahrzeugschloß bekannt, bei dem die mit dem Schließzylinder verbundene Steuervorrichtung ebenfalls eine Nockenscheibe enthält. Allerdings wirkt hierbei der entsprechende Nocken bei Drehung des Schließzylinders direkt auf das Endstück eines Bowdenzuges ein und verschiebt dieses in einer zur Richtung der Längsachse des Schließzylinders senkrechten Richtung, so daß auch dieses Zündschloß einen relativ großen seitlichen Einbauraum benötigt.

Gleiches gilt schließlich auch für das aus den Fig.5 und 6 der DE 44 16 864 C1 bekannte Zündschloß. Bei diesem Zündschloß wird anstatt einer Nockenscheibe eine Kurvenscheibe zusammen mit dem Schließzylinder gedreht, in welche ein mit einem Schieber verbundener Stift eingreift. Durch den Schieber wird ein entsprechender Hebel verschwenkt, welcher wiederum mit dem einen Ende eines Bowdenzuges verbunden ist.

Der Erfindung liegt die Aufgabe zugrunde, ein Kraftfahrzeugschloß anzugeben, welches kompakt und robust aufgebaut und in bezug auf die Längsachse des Schließzylinders in radialer Richtung nur einen geringen Einbauraum in das jeweilige Kraftfahrzeug benötigt.

Diese Aufgabe wird erfindungsgemäß durch die Merkmale des kennzeichnenden Teils des Anspruchs 1 gelöst. Weitere, besonders vorteilhafte Ausgestaltungen der Erfindung offenbaren die Unteransprüche.

Die Erfindung beruht im wesentlichen auf dem Gedanken, den Schließzylinder des Schlosses mit einer Führungshülse drehfest zu verbinden, die auf ihrer Außenseite eine schraubenförmige Nut aufweist. In diese Nut greift der Bolzen eines in Richtung der Längsachse des Schließzylinders linear verschiebbaren Steuerringes ein, welcher die Führungshülse in einem Teilbereich umschließt. Der Steuerring besitzt auf seiner äußeren Oberfläche einen Mitnehmer, der auf einen federbelasteten, in axialer Richtung verschiebbaren Schieber einwirkt, und der über einen Bowdenzug oder ein Gestänge mit dem Sperrhebel verbindbar ist.

Wird der Schließzylinder von seiner Ausgangsstellung in eine Betriebsstellung (z.B. entriegelte Stellung eines Wählhebels etc.) gedreht, so bewirkt die Drehung der Führungshülse eine axiale Verschiebung des Steuerringes und damit auch eine axiale Verschiebung des Schiebers von einer Ausgangslage in eine Endlage. Sofern der Schieber über einen Bowdenzug mit einem verschiebbaren sperrbolzen verbunden ist, bewirkt die Verschiebung des Schiebers eine entsprechende Verschiebung des Sperrbolzens von einer Sperrstellung in eine Entriegelungsstellung.

Anders als bei bekannten Kraftfahrzeugschlössern wird bei dem erfindungsgemäßen Schloß die Drehbewegung des Schließzylinders also nicht in eine zur Längsachse des Schließzylinders radiale Bewegung, etwa zur Betätigung eines Hebels oder Schiebers, umgewandelt, sondern in eine Bewegung parallel zur Längsachse des Schließzylinders. Die bei bekannten Kraftfahrzeugschlössern häufig aufwendigen Umlenkgetriebe können bei dem erfindungsgemäßen Schloß entfallen.

Das erfindungsgemäße Kraftfahrzeugschloß ist einfach und stabil herstellbar. Mit ihm lassen sich große Kräfte übertragen, ohne daß die Kräfte am Schlüssel zur Betätigung des Schließzylinders nennenswert erhöht werden müssen. Der benötigte Einbauraum ist gering. Durch die Zwangssteuerung von Steuerring und Führungshülse sind nur wenige Bauteile erforderlich.

Um sicherzustellen, daß der Abzug eines entsprechenden Schlüssels aus dem Schließzylinder des Kraftfahrzeugschlosses nur möglich ist, wenn der Sperrbolzen sich in seiner Sperrstellung (z.B. Verriegelung des Wählhebels in der Parkstellung) befindet, ist an der äußeren Oberfläche der Führungshülse in einem Teilbereich, der nicht von dem Steuerring umfaßt wird, ein nasenförmiges Sperrglied angeordnet. Bei einer Drehung des Schließzylinders von der Betriebsstellung in die Ausgangsstellung schlägt das Sperrglied vor Erreichen der Ausgangsstellung gegen den axial verschiebbaren Schieber, sofern sich der Schieber -aufgrund der entsprechenden Stellung des Sperrbolzens- nicht in seiner Ausgangslage befindet. Eine Rückstellung des Schließzylinders in seine Ausgangsstellung wird in diesem Fall verhindert. Sobald der Schieber sich in seiner Ausgangslage befindet, läßt sich das Sperrglied an dem Endstück vorbeischwenken und der Schließzylinder in die Schlüsselabzugsstellung drehen.

Besonders vorteilhaft hat sich das erfindungsgemäße Kraftfahrzeugschloß bei Fahrzeugen mit Getriebeautomatik bewährt. Dabei besteht der Sperrbolzen aus einem abgesetzten Zylinder, der in eine öffnung einer am Wählhebel befestigten Platte eingreift. In der Sperrstellung des Sperrbolzens, bei der der Wählhebel in seiner Parkposition steht, greift der größere Zylinder des Sperrbolzens in eine entsprechende öffnung der Platte ein. Die anderen Schaltpositionen können nur in gezogener Bowdenzugstellung, bei der der Schieber sich also in seiner Endlage befindet, erreicht werden, da in dem übrigen Schaltbereich nur jeweils eine kleinere kreisförmige öffnung für den kleineren Durchmesser des Sperrbolzens zur Verfügung steht. Steht beim Abstellen des Fahrzeuges die Stellung des Wählhebels nicht in der Parkstellung, so kann der Schlüssel nicht bis zur Ausgangsstellung zurückgedreht werden. Der Motor kann dann zwar abgestellt werden, ein Schlüsselabzug ist jedoch nicht möglich.

Weitere Einzelheiten und Vorteile der Erfindung ergeben sich aus dem folgenden anhand von Figuren erläuterten Ausführungsbeispiel. Es zeigen:
- Fig.1: eine perspektivische Ansicht eines erfindungsgemäßen Kraftfahrzeugschlosses in seiner Ausgangsstellung mit einem Teil einer im Längsschnitt dargestellten Wählhebelautomatik mit in Parkstellung befindlichem Wählhebel;
- Fig.2: eine Seitenansicht der in Fig.1 dargestellten Wählhebelautomatik;
- Fig.3: eine Fig.1 entsprechende Ansicht eines erfindungsgemäßen Kraftfahrzeugschlosses, bei dem sich der Wählhebel in einer Betriebsstellung befindet;
- Fig.4: eine Seitenansicht der in Fig.3 dargestellten Wählhebelautomatik und
- Fig.5: eine Explosionsdarstellung der wesentlichen Teile des erfindungsgemäßen Kraftfahrzeugschlosses.

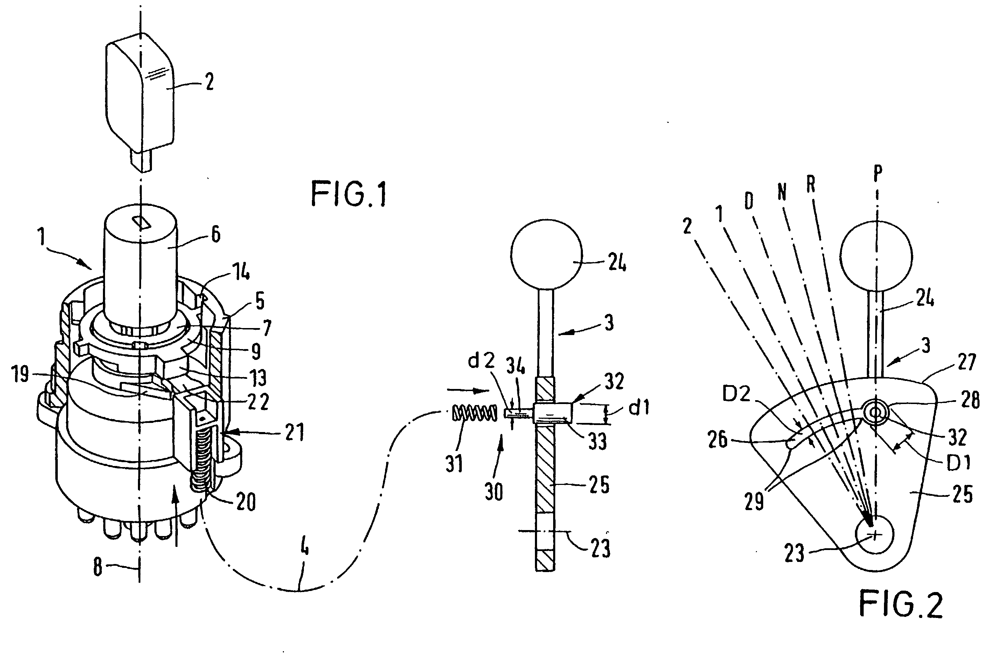

In Fig.1 ist mit 1 ein erfindungsgemäßes Kraftfahrzeugschloß, mit 2 ein Schlüssel zur Betätigung des Schlosses und mit 3 der für die Erläuterung der Erfindung wesentliche Teil einer Wählhebelautomatik bezeichnet. Das Kraftfahrzeugschloß 1 und die Wählhebelautomatik 3 sind über einen Bowdenzug 4 miteinander verbunden, der in Fig.1 aus Übersichtlichkeitsgründen lediglich durch eine strichpunktierte Linie angedeutet ist.

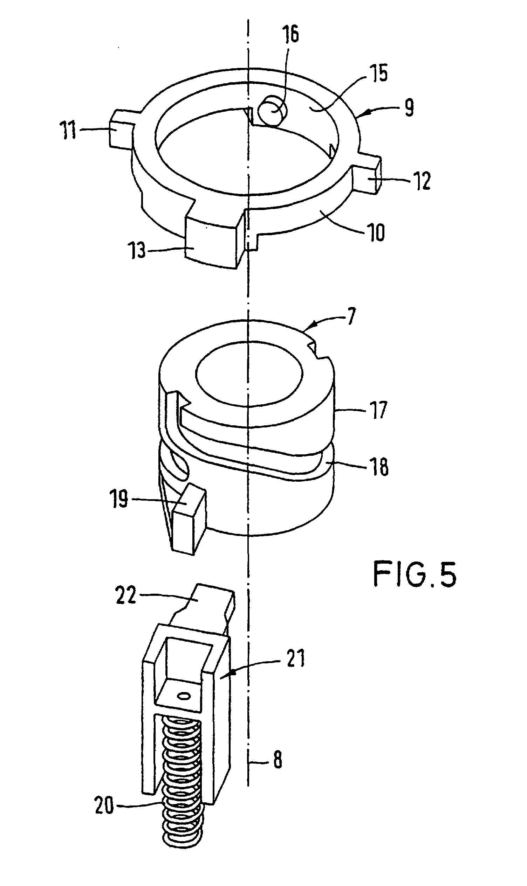

Das Kraftfahrzeugschloß 1 besteht aus einem Gehäuse 5, in dem ein Schließzylinder 6 und eine mit dem Schließzylinder drehfest verbundene Führungshülse 7 angeordnet ist. Ein in Richtung der Schließzylinderachse 8 sich erstreckender erster Teilabschnitt der Führungshülse 7 wird von einem Steuerring 9 umfaßt, der auf seiner Außenseite 10 zwei gegenüberliegende nasenförmige Führungsteile 11, 12 und einen Mitnehmer 13 aufweist (Fig.5). Die Führungsteile 11, 12 greifen in entsprechende sich in axiale Richtung 8 des Schließzylinders 6 erstreckende Längsnuten 14 des Gehäuses 5 ein (Fig.1).

Auf der inneren Oberfläche 15 des Steuerringes 9 ist ein Führungsbolzen 16 angeordnet, der in eine schraubenförmig ausgebildete, in der äußeren Oberfläche 17 der Führungshülse 7 angeordnete Nut 18 eingreift (Fig.5). Außerdem ist an der Oberfläche 17 der Führungshülse 7 ein nasenförmiges Sperrglied 19 vorgesehen, dessen Bedeutung nachfolgend noch näher erläutert werden wird.

Das Kraftfahrzeugschloß 1 enthält ferner einen in axialer Richtung 8 gegen den Druck einer Feder 20 verschiebbar angeordneten Schieber 21, an dem das kraftfahrzeugschloßseitige Ende des Bowdenzuges 4 befestigt ist und der eine zur Mittelachse 8 hindeutende zungenförmige Lasche 22 besitzt. Das dem Schieber 21 abgewandte Ende der Feder 20 stützt sich an einem aus Übersichtlichkeitsgründen nicht dargestellten Vorsprung des Gehäuses 5 ab (Fig.1).

Die in Fig.1 und 2 mit 3 bezeichnete Wählhebelautomatik besteht aus einem um eine Drehachse 23 schwenkbaren Wählhebel 24 und einer mit dem Wählhebel 24 verschwenkbaren Wählhebelplatte 25. In der Wählhebelplatte 25 ist ein Langloch 26 vorgesehen, welches an seinem dem Wählhebel zugewandten Ende 27 eine kreisförmige Öffnung 28 aufweist, deren Durchmesser D1 größer ist als der Durchmesser D2 des Langloches 26 in seinem restlichen Bereich 29.

An dem der Wählhebelautomatik 3 zugewandten Ende 30 des Bowdenzuges 4 ist ein mit einer Druckfeder 31 (in Fig.1 nur schematisch angedeutet) beaufschlagter Sperrbolzen 32 angeordnet. Der Sperrbolzen 32 ist als abgesetzter Zylinder ausgebildet und weist in einem ersten Bereich 33 einen Durchmesser d1 auf, der etwas kleiner, aber in der Größenordnung des Durchmessers D1 der kreisförmigen Öffnung 28 des Langloches 26 ist. Der Sperrbolzen 32 befindet sich in der kreisförmigen Öffnung 28 und verriegelt somit den Wählhebel 24 in der Parkstellung "P". Der zweite Bereich 34 des Sperrbolzens 32 hingegen besitzt einen Durchmesser d2, der etwas kleiner, aber in der gleichen Größenordnung als der Durchmesser D2 des Langloches 26 ist.

Im folgenden wird näher auf die Wirkungsweise des erfindungsgemäßen Kraftfahrzeugschlosses 1 in Verbindung mit der Wählhebelautomatik 3 eingegangen. Dabei wird angenommen, daß sich der Wählhebel und der Schließzylinder in den in den Fig.1 und 2 dargestellten Ausgangsstellungen (Sperrstellung, abgezogener Zündschlüssel) befinden.

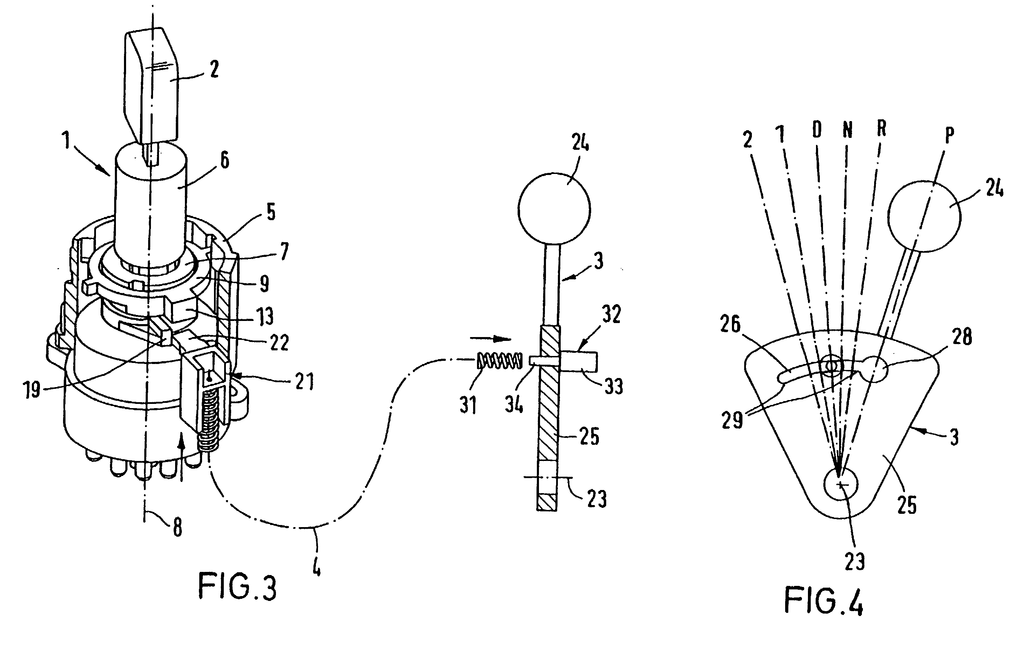

Soll nun das Fahrzeug gestartet werden, so wird zunächst der Zündschlüssel 2 in den Schließzylinder 6 eingeführt und zum Starten des Fahrzeuges in an sich bekannter weise nach rechts gedreht. Mit dem Schließzylinder 6 dreht sich auch die Führungshülse 7 und verschiebt mittels des in die schraubenförmige Nut 18 eingreifenden Führungsbolzens 16 (Fig.5) den Steuerring 9 nach unten. Dabei drückt der Mitnehmer 13 des Steuerringes 9 über die zungenförmige Lasche 22 den mit dem Bowdenzug 4 verbundenen Schieber 21 gegen den Druck der Feder 20 von seiner Ausgangslage in seine Endlage. Durch die wählhebelseitig angeordnete Druckfeder 31 wird der Sperrbolzen 32 so weit aus der kreisförmigen öffnung 28 des Langloches 26 der Wählhebelplatte 25 herausgedrückt, bis sich innerhalb der öffnung 28 nur noch der zweite Zylinderbereich 34 des Sperrbolzens 32 mit dem Durchmesser d2 befindet. Nun kann der Wählhebel 24 aus seiner Parkstellung "P" in eine gewünschte Betriebsstellung geschwenkt werden (vgl. Fig.3 und 4).

Soll umgekehrt das Fahrzeug gegen Diebstahl gesichert werden, muß zunächst der Wählhebel 24 in die Parkposition geschwenkt werden. Anschließend wird dann mittels des Zündschlüssels 2 der Schließzylinder 6 von seiner Betriebs- in seine Ausgangsstellung gedreht. Dabei wird der Steuerring 9 und durch den Druck der Feder 20 auch der Schieber 21 nach oben bewegt. Der erste Zylinderbereich 33 des Sperrbolzens 32 wird in die Öffnung 28 der Wählhebelplatte 25 gezogen und der Wählhebel 24 ist verriegelt.

Sofern der Wählhebel 24 sich nicht in der Parkstellung befindet, läßt sich der Schließzylinder 6 nicht in seine Ausgangsstellung zurückdrehen und damit der Zündschlüssel 2 nicht abziehen. Bei einer Drehung des Zündschlüssels 2 dreht sich zunächst auch die Führungshülse 7 und verschiebt damit den Steuerring 9 nach oben. Allerdings verschiebt sich nicht gleichzeitig auch der Schieber 21 von seiner Endlage in seine Ausgangslage, da der Sperrbolzen 32 in der in Fig.3 dargestellten Stellung verharrt. Nach einem vorgegebenen Schwenkweg schlägt daher das an der Führungshülse 7 angeordnete nasenförmige Sperrglied 19 gegen die zungenförmige Lasche 22 des Schiebers 21, welches eine weitere Drehbewegung der Führungshülse 7 und damit auch des Schließzylinders 6 verhindert. Erst wenn sich der Wählhebel 24 in seiner Parkposition befindet, drückt die Feder 20 den Schieber 21 mit der zungenförmigen Lasche 22 nach oben und die Führungshülse 7 kann weiter gedreht werden, wobei das Sperrglied 19 unter dem Schieber 21 hindurchtaucht.

Aus dem Vorstehenden ergibt sich, daß die Federkraft der kraftfahrzeugschloßseitigen Feder 20 des Bowdenzuges 4 größer sein muß als die Federkraft der wählhebelseitigen Feder 31, um eine Rücksteuerung des Sperrbolzens 32 am Wählhebel 24 bewirken zu können.

Die Erfindung ist selbstverständlich nicht auf das vorstehend beschriebene Ausführungsbeispiel beschränkt sondern auf den Gegenstand der beiliegenden Patentansprüche. So ist das erfindungsgemäße Kraftfahrzeugschloß nicht nur in Verbindung mit einer Wählhebelautomatik einsetzbar. Vielmehr ist beispielsweise auch denkbar, das erfindungsgemäße Schloß über einen Bowdenzug oder ein mechanisches Gestänge mit einem Sperrbolzen zu verbinden, der (als Diebstahlschutz) in die Lenksäule eines Fahrzeuges eingreift. Auch muß es sich bei dem erfindungsgemäßen Fahrzeugschloß nicht unbedingt um das Zündschloß des Fahrzeuges handeln.

Außerdem wäre auch denkbar, daß bei Verwendung des erfindungsgemäßen Kraftfahrzeugschlosses die Wählhebelplatte fahrzeugfest und der Schwenkhebel an dem Wählhebel fest angeordnet ist.

### Bezugszeichenliste

- 1: Kraftfahrzeugschloß
- 2: Zündschlüssel
- 3: Wählhebelautomatik
- 4: Bowdenzug
- 5: Gehäuse
- 6: Schließzylinder
- 7: Führungshülse
- 8: Schließzylinderachse, Mittelachse
- 9: Steuerring
- 10: Außenseite (Steuerring)
- 11,12: Führungsteile
- 13: Mitnehmer
- 14: Längsnuten
- 15: innere Oberfläche (Steuerring)
- 16: Führungsbolzen
- 17: äußere Oberfläche (Führungshülse)
- 18: Nut
- 19: nasenförmiges Sperrglied
- 20: Feder, Druckfeder
- 21: Schieber
- 22: zungenförmige Lasche
- 23: Drehachse
- 24: Wählhebel
- 25: Wählhebelplatte
- 26: Langloch
- 27: wählhebelseitiges Ende
- 28: kreisförmige Öffnung
- 29: Bereich
- 30: wählhebelseitiges Ende (Bowdenzug)
- 31: Feder, Druckfeder
- 32: Sperrbolzen
- 33: erste Zylinderbereich
- 34: zweite Zylinderbereich

## Patentansprüche

1. Kraftfahrzeugschloß mit einem Gehäuse (5) und mit einem von einer ersten Stellung in mindestens eine zweite Stellung drehbaren Schließzylinder (6) und einer mit dem Schließzylinder (6) verbundenen Steuervorrichtung, welche zur Betätigung eines Sperrbolzens (32) von einer Sperrstellung in eine Entriegelungsstellung benutzt werden kann, wobei die Steuervorrichtung und der Sperrbolzen (32) über eine mechanische Verbindung (4), wie einem Bowdenzug oder ein Gestänge, miteinander verbindbar sind, **gekennzeichnet durch** die Merkmale,
a) die Vorrichtung zur Ansteuerung des Sperrbolzens (32) enthält eine drehfest mit dem Schließzylinder (6) verbundene Führungshülse (7);
b) die Führungshülse (7) wird in einem Teilbereich von einem Steuerring (9) umfaßt und ist mit diesem über eine schraubenförmig verlaufende Nut/Federverbindung verbunden, derart, daß der Steuerring (9) bei Drehung der Führungshülse (7) eine lineare Bewegung in axialer Richtung (8) ausführt;
c) der Steuerring (9) besitzt auf seiner Außenseite (10) einen Mitnehmer (13), der mit einem Schieber (21) in Eingriff steht, welcher mit dem Sperrbolzen (32) über die mechanische Verbindung (4) verbunden werden kann, derart, daß bei Drehung des Schließzylinders (6) von der ersten in die zweite Stellung der Mitnehmer (13) den Schieber (21) gegen den Druck einer Feder (20) axial von einer Ausgangs- in eine Endlage und damit auch den Sperrbolzen (32) von seiner Sperr- in seine Entriegelungsstellung verschieben kann.

2. Kraftfahrzeugschloß nach Anspruch 1, **dadurch gekennzeichnet, daß** an der äußeren Oberfläche (17) der Führungshülse (7) ein nasenförmiges Sperrglied (19) angeordnet ist, derart, daß es bei einer Drehung des Schließzylinders (6) von der zweiten in die erste Stellung vor Erreichen der ersten Stellung an den axial verschiebbaren Schieber (21) anschlägt und somit eine Rückstellung des Schließzylinders (6) in seine erste Stellung verhindert, wenn sich der Schieber (21) nicht in seiner Ausgangslage befindet, und daß das Sperrglied (19) an dem Schieber (21) vorbeischwenkbar ist, wenn sich der Schieber (21) in seiner Ausgangslage befindet.

3. Kraftfahrzeugschloß nach Anspruch 1 oder 2, **dadurch gekennzeichnet, daß** die spiralförmig verlaufende Nut/Federverbindung zwischen Steuerring (9) und Führungshülse (7) aus einem auf der inneren Oberfläche (15) des Steuerringes (9) angeordneten Führungsbolzen (16) und einer schraubenförmig in die äußere Oberfläche (17) der Führungshülse (7) angeordneten Nut (18) besteht, in welche der Führungsbolzen (16) eingreift.

4. Kraftfahrzeugschloß nach einem der Ansprüche 1 bis 3 , **dadurch gekennzeichnet, daß** der Steuerring (9) außenseitig mindestens ein Führungsteil (11,12) besitzt, welches in eine entsprechende sich in Richtung der Schließzylinderachse (8) des Gehäuses (5) erstreckende Längsnut (14) eingreift.

5. Kraftfahrzeugschloß nach einem der Ansprüche 1 bis 4, **dadurch gekennzeichnet, daß** der Schieber (21) eine zungenförmige Lasche (22) aufweist, gegen die der Mitnehmer (13) des Steuerringes (9) bei Drehung des Schließzylinders (6) von der ersten in die zweite Stellung drückt und die das nasenförmige Sperrglied (19) der Führungshülse (7) blockiert, sofern sich der Schieber (21) nicht in seiner Ausgangslage befindet.

6. Kombination aus einem Kraftfahrzeugschloß nach einem der Ansprüche 1 bis 5 und der mechanischen Verbindung (4), **dadurch gekennzeichnet, daß** es sich bei der mechanischen Verbindung (4) um einen Bowdenzug handelt, welcher an seinen beiden Enden jeweils mit einer Druckfeder (20,31) versehen ist, die für eine spielfreie Ansteuerung des jeweiligen Gegenstückes sorgen, und daß die kraftfahrzeugschloßseitig angeordnete Feder (20) stärker ausgelegt ist als die sperrbolzenseitig angeordnete Feder (31).

7. Kombination aus einem Sperrbolzen (32), einer mit einem Wählhebel (24) einer Getriebeautomatik verbundenen Wählhebelplatte (25) und einem Kraftfahrzeugschloß nach einem der Ansprüche 1 bis 6, **gekennzeichnet durch** die Merkmale:
a) der Sperrbolzen (32) greift in ein Langloch (26) der Wählhebelplatte (25) ein;
b) der Sperrbolzen (32) besitzt die Form eines abgesetzten Zylinders mit zwei Bereichen (33,34), wobei der erste Zylinderbereich (33) einen größeren Durchmesser aufweist als der zweite Zylinderbereich (34),
c) das Langloch (26) weist an seinem einen Ende eine kreisförmige öffnung (28) auf, deren Durchmesser größer ist als der Durchmesser des restlichen Bereiches (29) des Langloches (26) und in welche der erste Zylinderbereich (33) des Sperrbolzens (32) bei der Verriegelung des Wählhebels in seiner Parkstellung einschiebbar ist,
d) der Durchmesser des Langloches (26) in seinem restlichen Bereich ist derart gewählt, daß lediglich der zweite Zylinderbereich (34) in diese Öffnung einschiebbar ist.

## Claims

1. Motor-vehicle lock having a housing (5) and having a lock cylinder (6), which can be rotated from a first position into at least a second position, and having a control device which is connected to the lock cylinder (6) and can be utilized for actuating a locking pin (32) from a locking position into an unlocking position, it being possible for the control device and the locking pin (32) to be connected to one another via a mechanical connection (4), such as a Bowden cable or a linkage, **characterized by** the following features:
a) a device for activating the locking pin (32) contains a guide sleeve (7) connected in a rotationally fixed manner to the lock cylinder (6);
b) the guide sleeve (7) is enclosed, over a subregion, by a control ring (9) and is connected to the latter via a helically running groove/tongue connection such that, upon rotation of the guide sleeve (7), the control ring (9) executes a linear movement in the axial direction (8);
c) the control ring (9) has, on its outside (10), a driver (13) which engages with a slide (21), which can be connected to the locking pin (32) via the mechanical connection (4) such that, upon rotation of the lock cylinder (6) from the first position into the second position, the driver (13) can displace the slide (21) axially, counter to the pressure of a spring (20), from the starting position into an end position, and can thus also displace the locking pin (32) from its locking position into its unlocking position.

2. Motor-vehicle lock according to Claim 1, **characterized in that** a nose-like blocking member (19) is arranged on the outer surface (17) of the guide sleeve (7) such that, upon rotation of the lock cylinder (6) from the second position into the first position, it strikes against the axially displaceable slide (21) before the first position is reached and thus prevents the lock cylinder (6) from returning into its first position if the slide (21) is not located in its starting position, and **in that** the blocking member (19) can be pivoted past the slide (21) if the slide (21) is located in its starting position.

3. Motor-vehicle lock according to Claim 1 or 2, **characterized in that** the helically running groove/tongue connection between control ring (9) and guide sleeve (7) comprises a guide pin (16), which is arranged on the inner surface (15) of the control ring (9), and a groove (18), which is arranged helically in the outer surface (17) of the guide sleeve (7) and in which the guide pin (16) engages.

4. Motor-vehicle lock according to one of Claims 1 to 3, **characterized in that** the control ring (9), on the outside, has at least one guide part (11, 12) which engages in a correspondingly longitudinal groove (14) extending in the direction of the lock-cylinder axis (8) of the housing (5).

5. Motor-vehicle lock according to one of Claims 1 to 4, **characterized in that** the slide (21) has a tongue-like lug (22), against which the driver (13) of the control ring (9) presses upon rotation of the lock cylinder (6) from the first position into the second position, and which blocks the nose-like blocking member (19) of the guide sleeve (7) if the slide (21) is not located in its starting position.

6. Combination of a motor-vehicle lock according to one of claims 1 to 5 and the mechanical connection (4), **characterized in that** the mechanical connection (4) is a Bowden cable which is provided at both ends in each case with a compression spring (20, 31), these springs ensuring play-free activation of the respective counterpart, and **in that** the spring (20) which is arranged on the motor-vehicle lock is designed to be stronger than the spring (31) which is arranged on the locking pin.

7. Combination of a locking pin (32), a selector-lever plate (25), which is connected to a selector lever (24) of an automatic gearbox, and a motor-vehicle lock according to one of claims 1 to 6, **characterized by** the following features:
a) the locking pin (32) engages in a slot (26) of the selector-lever plate (25);
b) the locking pin (32) is in the form of a stepped-diameter cylinder with two regions (33, 34), the first cylinder region (33) having a larger diameter than the second cylinder region (34),
c) the slot (26) has, at one end, a circular opening (28), of which the diameter is greater than the diameter of the rest of the region (29) of the slot (26) and into which it is possible to push the first cylinder region (33) of the locking pin (32) when the selector lever is locked in its parking position,
d) in the rest of the region of the slot (26) the diameter of the latter is selected such that only the second cylinder region (34) can be pushed into this opening.

## Revendications

1. Serrure pour véhicule automobile avec un boîtier (5) et avec un cylindre de fermeture (6) pouvant tourner d'une première position dans au moins une deuxième position et un dispositif de commande relié au cylindre de fermeture (6), qui peut être utilisé pour actionner une tige d'arrêt (32) d'une position de blocage à une position de déverrouillage, dans laquelle le dispositif de commande et la tige d'arrêt (32) peuvent être reliés l'un à l'autre par une liaison mécanique (4), comme un câble Bowden ou une tringlerie, **caractérisée par** les caractéristiques:
a) le dispositif pour actionner la tige d'arrêt (32) comporte une douille de guidage (7) assemblée sans rotation avec le cylindre de fermeture (6);
b) la douille de guidage (7) est entourée dans une région partielle par un anneau de commande (9) et est assemblée à celui-ci par un assemblage à rainure et languette tracé en hélice, de telle manière que l'anneau de commande (9) décrive un mouvement linéaire en direction axiale (8) lors de la rotation de la douille de guidage (7);
c) l'anneau de commande (9) comporte sur sa face extérieure (10) un mentonnet (13), qui est en prise avec un coulisseau (21), lequel peut être relié à la tige d'arrêt (32) par la liaison mécanique (4), de telle manière que, lors de la rotation du cylindre de fermeture (6) de la première à la deuxième position, le mentonnet (13) puisse déplacer axialement le coulisseau (21) contre la pression d'un ressort (20) d'une position initiale à une position finale et ainsi également la tige d'arrêt (32) de sa position de blocage dans sa position de déverrouillage.

2. Serrure pour véhicule automobile suivant la revendication 1, **caractérisée en ce qu'**un élément d'arrêt (19) en forme de bec est disposé sur la surface extérieure (17) de la douille de guidage (7), de telle manière que, lors d'une rotation du cylindre de fermeture (6) de la deuxième position à la première position, il bute contre le coulisseau mobile axialement (21) avant d'atteindre la première position et ainsi empêche un retour en arrière du cylindre de fermeture (6) dans sa première position, lorsque le coulisseau (21) ne se trouve pas dans sa position initiale, et **en ce que** l'élément d'arrêt (19) peut pivoter devant le coulisseau (21) lorsque le coulisseau (21) se trouve dans sa position initiale.

3. Serrure pour véhicule automobile suivant la revendication 1 ou 2, **caractérisée en ce que** l'assemblage à rainure et languette tracé en hélice entre l'anneau de commande (9) et la douille de guidage (7) se compose d'un téton de guidage (16) disposé sur la surface intérieure (15) de l'anneau de commande (9) et d'une rainure (18) disposée en hélice dans la surface extérieure (17) de la douille de guidage (7), dans laquelle le téton de guidage (16) est engagé.

4. Serrure pour véhicule automobile suivant l'une quelconque des revendications 1 à 3, **caractérisée en ce que** l'anneau de commande (9) possède extérieurement au moins une pièce de guidage (11, 12), qui s'engage dans une rainure longitudinale correspondante (14) qui s'étend dans le sens de l'axe (8) du cylindre de fermeture du boîtier (5).

5. Serrure pour véhicule automobile suivant l'une quelconque des revendications 1 à 4, **caractérisée en ce que** le coulisseau (21) présente un ergot en forme de languette (22), contre lequel le mentonnet (13) de l'anneau de commande (9) appuie lors de la rotation du cylindre de fermeture (6) de la première à la deuxième position et bloque l'élément d'arrêt en forme de bec (19) de la douille de guidage (7), pour autant que le coulisseau (21) ne se trouve pas dans sa position initiale.

6. Combinaison d'une serrure pour véhicule automobile suivant l'une quelconque des revendications 1 à 5 et de la liaison mécanique (4), **caractérisée en ce qu'**il s'agit, pour la liaison mécanique (4), d'un câble Bowden qui est pourvu à chacune de ses deux extrémités d'un ressort de pression (20, 31), qui assurent une commande sans jeu de la pièce respectivement opposée, et **en ce que** le ressort (20) disposé du côté de la serrure pour véhicule automobile est de conception plus robuste que le ressort (31) disposé du côté de la tige d'arrêt.

7. Combinaison d'une tige d'arrêt (32), d'une plaque de levier de sélection (25) assemblée à un levier de sélection (24) d'une boîte de vitesses automatique et d'une serrure pour véhicule automobile suivant l'une quelconque des revendications 1 à 6, **caractérisée par** les caractéristiques:
a) la tige d'arrêt (32) s'engage dans un trou allongé (26) de la plaque de levier de sélection (25);
b) la tige d'arrêt (32) possède la forme d'un cylindre étagé avec deux zones (33, 34), dans lequel la première zone (33) du cylindre présente un plus grand diamètre que la seconde zone (34) du cylindre,
c) le trou allongé (26) présente à sa première extrémité une ouverture circulaire (28), dont le diamètre est plus grand que le diamètre de la région restante (29) du trou allongé (26) et dans laquelle la première zone (33) du cylindre de la tige d'arrêt (32) peut être introduite lors du verrouillage du levier de sélection dans sa position de stationnement,
d) le diamètre du trou allongé (26) dans sa région restante est choisi de telle manière que seule la seconde zone (34) du cylindre puisse être introduite dans cette ouverture.
